Europäisches Patentamt

(19) European Patent Office

Office européen des brevets

(11) Numéro de publication: **0 234 156 B1**

(12) **FASCICULE DE BREVET EUROPEEN**

(45) Date de publication de fascicule du brevet:
21.08.91

(51) Int. Cl.⁵: **F16L 59/12**

(21) Numéro de dépôt: 86402912.9

(22) Date de dépôt: 23.12.86

(54) **Structure tubulaire comportant une bande droite pliée.**

(30) Priorité: 30.12.85 FR 8519429

(43) Date de publication de la demande:
02.09.87 Bulletin 87/36

(45) Mention de la délivrance du brevet:
21.08.91 Bulletin 91/34

(84) Etats contractants désignés:
DE ES GB IT NL SE

(56) Documents cités:
DE-B- 1 177 432
DE-C- 262 617
FR-A- 2 418 411
US-A- 2 556 011
US-A- 2 939 509

(73) Titulaire: **INSTITUT FRANCAIS DU PETROLE**
**4, Avenue de Bois-Préau**
**F-92502 Rueil-Malmaison(FR)**

(84) Etats contractants désignés:
**DE**

Titulaire: **COFLEXIP**
**23 Avenue de Neuilly**
**F-75116 Paris(FR)**

(84) Etats contractants désignés:
**DE ES GB IT NL SE**

(72) Inventeur: **Huvey, Michel**
**2, Avenue des Pinsons**
**F-78380 Bougival(FR)**
Inventeur: **Do, Anh Tuan**
**Résidence Beauregard 35, Avenue Saut du**
**Loup**
**F-78170 La Celle Saint Cloud(FR)**
Inventeur: **Gerez, Jean Michel**
**22, Rue de Verdun**
**F-78110 Le Vesinet(FR)**
Inventeur: **Le Gallais, Lucien**
**1, rue d'Artois**
**F-78630 Orgeval(FR)**

## Description

La présente invention concerne une structure tubulaire constituée à partir d'une bande droite pliée. Elle s'applique plus particulièrement à l'isolation de canalisations pouvant notamment servir au transport de fluides chauds ou froids, tels que des produits pétroliers (pétrole lourd ou gaz naturel liquéfié), cette structure étant garnie de matériaux ayant des propriétés d'isolation thermique comme par exemple des mousses.

Dans la suite de la description, on considèrera à titre d'exemple le cas d'une canalisation où la surface intérieure est matérialisée par une gaine ou tube interne.

Il est connu de constituer des canalisations isolées thermiquement en faisant s'expanser un produit alvéolaire, tel qu'une mousse de polyuréthanne, entre une conduite tubulaire mécaniquement résistante et une autre conduite qui servira ultérieurement de protection.

La première conduite sera appelée tube interne et la seconde tube externe dans la suite de la description.

On peut également déposer à la surface du tube interne une couche de laine de verre, de laine de roche ou d'un autre isolant que l'on enrubanne ou que l'on pose sous forme de demi-coquilles. Le tube externe est ensuite constitué autour de l'isolant par un moyen approprié, par exemple en assemblant des feuilles minces d'aluminium.

La résistance mécanique à l'écrasement de l'ensemble ainsi constitué est entièrement conditionnée par les résistances respectives de l'isolant et du tube externe, le tube interne ne commençant à participer que lorsque l'isolant est complètement écrasé.

Dans le cas de conduites fonctionnant à haute température (plus de 120°C) et placées dans une tranchée bétonnée qui leur est spécialement destinée, les contraintes mécaniques subies par le tube sont faibles et de tels tubes n'ont pas besoin d'une résistance mécanique particulière en ce qui concerne leur isolant et leur tube externe.

Celui-ci peut même ne pas être étanche sans que cela soit grave, puisque, en fonctionnement, si de l'eau pénètre accidentellement dans l'isolant, elle sera vaporisée.

Une telle solution, peu coûteuse en matériel, est par contre très onéreuse en génie civil. Elle présente cependant l'avantage de permettre une maintenance aisée, puisqu'il est relativement facile de pénétrer dans le tunnel-abri de la conduite pour y effectuer une inspection.

Par contre, dans le cas de conduites noyées dans le sol, celles-ci doivent résister à tous les efforts transmis par le terrain et en particulier à ceux dûs au charroi.

Le tube externe doit impérativement être étanche, toute eau ayant pénétré ne pouvant pas s'éliminer aisément dans le sol et un isolant humide étant un mauvais isolant.

Deux types de solutions existent, présentant chacune leurs inconvénients.

La première consiste à utiliser un tube externe rigide et solide, équipé de centreurs permettant de maintenir un espace constant entre le tube interne et le tube externe et à placer entre les deux un isolant léger. Le problème est posé par l'étanchéité aux raccordements du tube externe et par les ponts thermiques que peuvent constituer les centreurs.

La deuxième consiste à utiliser un isolant suffisamment dense pour être assez résistant mécaniquement et à le recouvrir d'une gaine peu résistante. C'est l'isolant qui encaisse les efforts. Comme il est dense, il est peu isolant et il faut donc en mettre une forte épaisseur. Il est donc coûteux. En revanche, les problèmes d'étanchéité et de raccordement de la gaine externe sont simplifiés puisque celle-ci peut être un simple tube thermoplastique extrudé et soudable sans difficultés à une température qui n'endommage pas l'isolant.

L'art antérieur est également illustré par le document DE-A-262.617 qui décrit une structure tubulaire comprenant un tube interne et au moins une bande pliée formant un anneau et dont la largeur est disposée selon une normale à la surface dudit tube.

L'objet de la présente invention est de remédier à ces inconvénients et notamment d'utiliser à la fois un isolant léger, donc bon isolant, utilisable en faible épaisseur donc à faible prix, associé éventuellement à un tube externe également léger, donc à faible résistance mécanique, en plaçant au sein de l'isolant une structure de renforcement susceptible de transmettre au tube interne qui est toujours mécaniquement résistant, puisqu'il véhicule des fluides sous pression, tous les efforts apportés au tube externe par le sol.

La présente invention concerne plus particulièrement une structure tubulaire qui comprend un tube interne et est réalisée à partir d'au moins une bande pliée.

Cette structure comporte ladite bande droite dont la largeur (côté de petite dimension) est disposée sensiblement selon au moins une normale audit tube. L'invention concerne également une structure tubulaire comprenant un tube interne $S_1$ de rayon $R_1$ et un tube externe $S_2$ de rayon $R_2$. Elle comporte une bande pliée dont la largeur est disposée sensiblement selon au moins une normale à au moins l'un desdits tubes qu'elle sépare.

La présente invention se caractérise notamment en ce que la bande droite est pliée alternativement par groupes de trois plis, la direction du pliage médian étant sensiblement perpendiculaire à la direction principale de la bande et la direction des deux autres pliages par rapport à ladite direction principale de la bande formant des angles sensiblement supplémentaires, en ce que la bande comporte une zone entre lesdits groupes de plis qui, après mise en place, est au moins en partie sous forme de couronne ou d'hélice et en ce que les traces desdits plis sur les tubes $s_1$ et $s_2$ de rayons $r_1$ et $r_2$ déterminent au moins en partie des lignes brisées en forme de triangle dont la hauteur relative au plus petit rayon $r_1$ est plus grande que celle relative au plus grand rayon $r_2$.

Selon un procédé de fabrication de la structure, non revendiqué par la présente invention, on enroule ladite bande autour dudit tube interne en disposant la largeur de cette bande perpendiculairement à la paroi dudit tube.

Par surface courbe, on entend une surface dont le rayon de courbure a une valeur finie non nulle.

Par bande droite, on entend une bande dont les deux côtés de plus grande dimension sont sensiblement de même longueur, comme par exemple une bande sensiblement rectangulaire ou sensiblement sinusoïdale.

Cette bande ne détermine pas des cellules fermées sur toute l'épaisseur de la structure, et par conséquent, on n'utilisera pas le terme de structure alvéolaire réservé par exemple aux structures en "nid d'abeille".

Lorsque la bande droite est pliée, une partie au moins des plis (utilisé ici dans le sens de trace) peut être sensiblement perpendiculaire à la direction générale de la bande, qui est le côté de dimension principale.

Dans le mode de réalisation de l'invention, le pliage de la bande est réalisé en suivant des lignes qui se répètent sensiblement par groupes de trois, un groupe de trois étant caractérisé par une ligne de pliage faisant un angle $\alpha$ avec un côté de la bande, la ligne de pliage suivante étant sensiblement perpendiculaire au côté de la bande, et la troisième ligne de pliage faisant avec le côté de la bande un angle $\beta$ sensiblement supplémentaire de l'angle $\alpha$, c'est-à-dire que $\alpha + \beta = \pi$ radians ou 180 degrés, les trois pliages peuvent être jointifs ou non jointifs.

Après pliage et pose, la trace sur la surface ou tube interne $S_1$ est une ligne brisée qui est alternativement une ligne suivant sensiblement la direction générale de la bande posée, puis une ligne en V se repliant plus ou moins sur elle-même; la trace sur la surface externe $S_2$ est analogue, mais le V est plus petit et la trace suivant la direction principale de la bande a une longueur appréciable, alors que sur la surface interne, la trace suivant la direction principale de la bande peut être par exemple très petite et même à la limite nulle.

Selon ce mode de réalisation, on a obtenu de bons résultats lorsque $S_1$ est la surface de plus petit rayon $R_1$.

Ce mode de réalisation permet à la bande de mieux renforcer la structure et de transmettre avec une très faible déformation au tube interne les efforts que subit le tube externe.

Dans le cas par exemple où l'une au moins des surfaces comporte une paroi tubulaire, la bande est disposée de façon telle que sa petite dimension ou largeur soit posée de façon sensiblement radiale, alors que sa plus grande dimension suit une direction qui est globalement sensiblement circonférencielle, longitudinale ou hélicoïdale sur la paroi.

La bande peut être continue ou discontinue. Les traces successives sur le support seront de préférence imbriquées lorsque les efforts mécaniques de compression à transmettre seront importants, et espacées lorsque ces efforts seront faibles.

La bande repliée a également une légère tendance à se "coucher" sur le tube à la pose, ce qui nécessite des moyens de maintien en place jusqu'à ce que la mousse isolante, par exemple, soit mise en place entre les spires de la bande. Il n'y a alors plus de problème.

Un moyen de maintien préféré utilisable lors de la pose de la bande pliée, consiste à coller sa tranche sur un ruban adhésif. On pose ensuite le côté non collant sur le tube et la bande se trouve naturellement posée de façon radiale.

Il n'y a d'ailleurs de problèmes que si la "longueur d'onde" de pliage de la bande est importante par rapport au diamètre du tube interne. Si la longueur d'onde est importante, il convient également de découper la "base" de ce pliage pour qu'il s'adapte à la forme du tube interne et lui transmette bien les efforts qu'il reçoit, transmis par le tube externe.

La bande peut également être fabriquée directement en forme, par exemple à partir d'un ruban de tissu de verre que l'on imprègne de résine thermodurcissable, ou d'un ruban de tissu préimprégné de résine thermodurcissable ou de résine thermoplastique, un traitement thermique permettant de stabiliser la forme.

La bande peut aussi être en métal et pliée sur une plieuse conventionnelle.

Le métal sera de préférence choisi parmi ceux faiblement conducteurs de la chaleur, parmi lesquels les aciers inoxydables à forte teneur en nickel (de 8% à 30%) sont particulièrement intéressants. De tels aciers inoxydables présentent en outre l'intérêt de bien résister à la corrosion par les produits qui peuvent diffuser à travers la paroi interne du tube et qui pourraient endommager des matériaux aisément corrodables.

La bande peut également être en matériaux composites, constituée de fibres continues ou discontinues, naturelles, artificielles ou synthétiques, minérales ou organiques, comme les fibres de verre, d'aramide, de carbone, de cellulose, de rayonne ou de polyester, utilisées sous forme de feutres, comme le papier, ou de tissus ou de rubans et liées par des résines thermoplastiques, telles que le polyfluorure de vinylidène (PVF2), les polyamides, les polyéoléfines, ou des résines thermodurcissables, comme les résines polyesters, les résines polyépoxydes, les résines phénoliques ou les polyimides.

Des additifs connus, tels que des ensimages, peuvent être placés sur les fibres pour améliorer les qualités de l'interface entre la fibre et la résine, sans pour cela sortir du cadre de l'invention. Enfin, des liants solubles, tels ceux couramment utilisés dans la fabrication des papiers peuvent être utilisés.

La bande peut enfin être constituée d'une bande thermoplastique extrudée et mise en forme dès sa sortie de l'extrudeuse par passage dans un conformateur lui donnant lors de son refroidissement la forme pliée désirée.

Cette opération effectuée, il devient possible de mettre en place la mousse isolante légère qui assurera efficacement sa fonction d'isolation sous une faible épaisseur et de déposer par dessus, par exemple par extrusion, une gaine d'étanchéité de faible épaisseur qui servira de tube externe.

Lorsque le tube externe est sollicité en compression par son environnement, en l'occurrence la pression exercée par le sol, celle-ci est transmise par la structure radiale au tube interne, ce qui fait que la mousse d'isolation n'est pas sollicitée en compression et n'a donc pas tendance à s'écraser.

Par ailleurs, la gaine externe, ainsi soutenue, résiste bien aux efforts du sol qu'elle aurait été bien incapable de supporter si elle n'avait pas été soutenue.

De plus, l'espace entre le tube interne et le tube externe pouvant être mis sous vide, la structure radiale empêche le tube externe de s'effondrer sur le tube interne.

La mousse isolante pourra servir également à stabiliser le pas que l'on a choisi et à maintenir un espacement sensiblement constant.

La structure devra bien entendu être plus résistante si la conduite doit être immergée par une grande profondeur d'eau que si elle doit être enterrée dans un jardin.

Cette structure pourra recevoir un garnissage isolant ou être mise sous vide. Cette canalisation peut être souple ou rigide; la structure peut adhérer au moins partiellement au tube interne, soit par soudage dans le cas où la structure et le tube sont tous deux métalliques, soit par collage dans les autres cas.

Pour une structure rigide et par exemple pour une canalisation rigide, la séquence des points d'adhérence est libre, par contre, dans le cas des structures souples, on évitera que deux points d'adhérence consécutifs appartiennent à un même plan tel que défini précédemment, permettant ainsi le mouvement relatif de la gaine et de la structure selon l'invention en cas de compression, d'allongement ou de flexion de la gaine.

On ne sortira pas du cadre de la présente invention en donnant aux bords intérieurs des bandes une forme particulière adaptée à ce qu'une fois mis en place, ces bords touchent exactement la surface à garnir. Il en va de même pour les bords extérieurs.

Les figures qui suivent permettront de mieux comprendre l'objet de l'invention. Parmi ces figures, à titre indicatif:

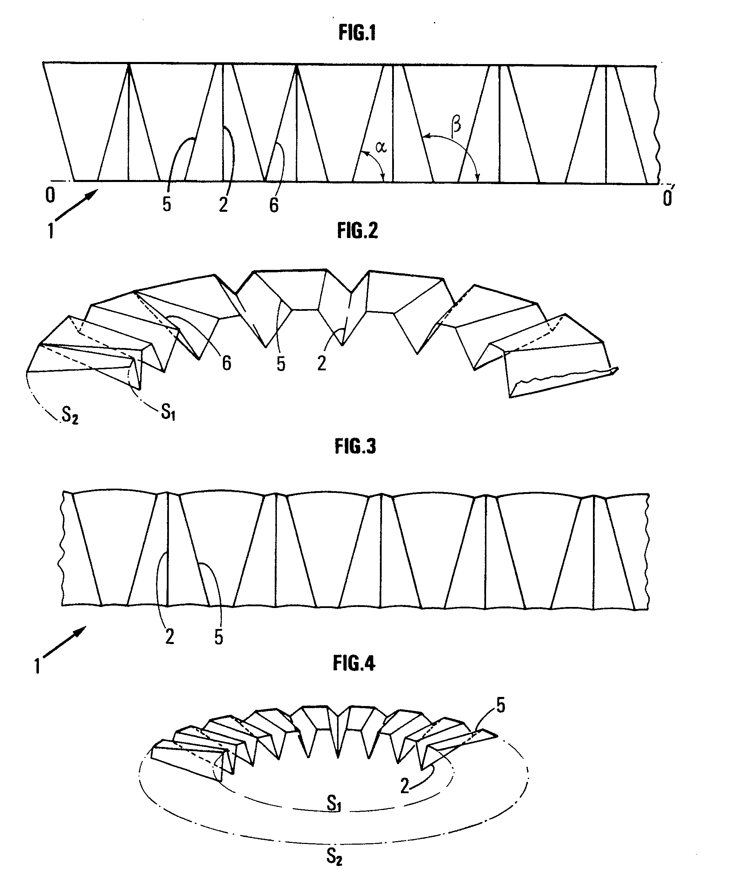

- les figures 1A, 1B, 1C et 1D représentent le mode de réalisation de l'invention.

Selon le mode de réalisation caractéristique de l'invention (Fig. 1A), une partie au moins des plis 2 est sensiblement perpendiculaire à la direction générale de la bande 00', c'est-à-dire à sa plus grande dimension tandis que des plis obliques 5 et 6, non jointifs ou jointifs permettent d'obtenir la structure selon l'invention après pliage (Fig. 1B). Les angles de pliage oblique $\alpha$ et $\beta$ mesurés par rapport à la même direction 00' sont sensiblement supplémentaires.

Après pliage, les secteurs délimités entre deux zones de trois plis forment sensiblement au moins en partie un secteur de couronne plane ou d'hélice. Les traces de ces plis sur les surfaces $S_1$ et $S_2$ de rayon $R_1$ et $R_2$ déterminent au moins en partie des lignes brisées en forme de triangles ou de V dont la hauteur relative au plus petit rayon $R_1$ est plus grande que celle relative au plus grand rayon $R_2$.

Une découpe supplémentaire, comme il est montré sur la figure 1C, par des moyens appropriés (par exemple en utilisant des ciseaux, un laser ou un jet d'eau sous haute pression), permet d'obtenir une adéquation parfaite de la couronne ou de l'hélice formée aux surfaces tubulaires $S_1$ de plus petit rayon et $S_2$ de plus grand rayon comme le montre la figure 1D, si bien que la pression locale exercée sur les parois est plus faible.

Les exemples qui suivent illustre l'invention.

Dans le premier exemple, on prend une bande de papier préimprégné, par exemple de résine phénolique à l'état B (fusible et soluble) de 5 cm de largeur que l'on replie sur elle-même de façon à former un pliage selon les figures 1A, 1B, 1C et 1D.

On fait cuire cette bande repliée sur elle-même, sans pression, dans une étuve pour stabiliser la forme en faisant passer la résine de l'état B à l'état C (infusible et insoluble), autrement dit, on fait refondre la résine et on la fait réticuler. La bande est ainsi stabilisée à sa nouvelle forme.

Cette bande est ensuite enroulée radialement autour d'un tube de façon à créer un espace autour duquel sera placé une gaine ou tube externe. Avant de placer cette gaine externe, on fait mousser dans le vide d'air compris dans la structure selon l'invention une composition polyuréthanne semi-rigide qui forme une mousse isolante de masse volumique 28 Kg/m$^3$.

Cette mousse renforcée par la bande de papier stabilisée est presque aussi isolante que si elle était seule ; par contre, l'isolation est beaucoup plus rigide dans le sens radial, bien qu'elle soit presque aussi souple que sans renfort dans le sens longitudinal du tube.

Cette dernière caractéristique ne présente aucun intérêt si cette isolation est posée sur un tube rigide, mais est par contre fort précieuse si une telle isolation est posée sur un tube souple.

Dans un deuxième exemple, comparatif selon l'art antérieur, qui servira de premier témoin, on place seulement quelques centreurs espacés entre le tube interne et le tube externe et on fait mousser la même mousse que dans l'exemple précédent entre les deux tubes. Dans les deux premiers exemples, la masse volumique propre de la mousse formée est de 28 Kg/m$^3$.

Dans un troisième exemple comparatif, comme dans l'exemple précédent, on garnit de mousse souple d'uréthanne l'espace créé entre deux tubes par des centreurs, mais cette fois-ci, on n'utilise plus une mousse très légère comme dans les deux exemples précédents, mais une mousse dense de masse volumique 350 Kg/m$^3$.

On procède alors à des mesures comparatives de propriétés thermiques et mécaniques sur les trois tubes isolés formés dans les exemples précédents. On obtient ainsi :

- Propriétés thermiques :
  Coefficient de conductibilité thermique $\lambda$ mesuré suivant la norme ASTM C 518 :
  Exemple 1 : $\lambda$ = 0,040 watts/mètre
  Exemple 2 : $\lambda$ = 0,029 watts/mètre
  Exemple 3 : $\lambda$ = 0,056 watts/mètre
  La mousse armée selon l'invention est plus conductrice que la mousse non armée de densité comparable. Elle est par contre beaucoup plus isolante que la mousse lourde de propriétés mécaniques pourtant plus faibles, comme on le verra ci-dessous.
- Propriétés mécaniques :
  Résistance en compression mesurée selon la méthode ASTM D 1621 :
  Exemple 1 : 6,3 bars pour une déformation de 3,6 %

Exemple 2 : 0,8 bars pour une déformation de 20,0 %
Exemple 3 : 2,1 bars pour une déformation de 10,0 %
- Souplesse longitudinale :
  Les tubes des exemples 1 et 2 sont aussi aisés à enrouler les uns que les autres, le tube de l'exemple 3 est beaucoup plus raide et difficile à enrouler autour d'un touret de faible diamètre, par exemple de dix fois le diamètre du tube.
- Masse volumique :
  Les masses volumiques mesurées pour le produit isolant terminé sont :
  Exemple 1 : 65 Kg/m$^3$
  Exemple 2 : 28 Kg/m$^3$
  Exemple 3 : 350 Kg/m$^3$

La mousse armée selon l'exemple 1 a des performances honorables, surtout compte tenu de la facilité de réalisation d'une telle structure.

Une telle structure, canalisation plus garniture, présente un réel avantage, car elle peut être soumise à des pressions externes importantes sans pour autant laisser s'écraser le matériau servant d'isolant thermique. En effet, les efforts radiaux sont transmis par la structure selon l'invention au tube interne qui doit de toute façon être mécaniquement résistant pour résister aux efforts de pression interne et externe dûs à l'environnement, qu'il soit ou non isolé thermiquement.

## Revendications

1. Structure tubulaire comprenant un tube interne $s_1$ de rayon $r_1$ et un tube externe $s_2$ de rayon $r_2$, comportant au moins une bande droite pliée dont la largeur est disposée sensiblement selon au moins une normale à au moins l'un desdits tubes qu'elle sépare, caractérisée en ce que la bande droite est pliée alternativement par groupes de trois plis, la direction du pliage médian étant sensiblement perpendiculaire à la direction principale de la bande et la direction des deux autres pliages par rapport à ladite direction principale de la bande formant des angles sensiblement supplémentaires, en ce que la bande comporte une zone entre lesdits groupes de plis qui, après mise en place, est au moins en partie sous forme de couronne ou d'hélice et en ce que les traces desdits plis sur les tubes $s_1$ et $s_2$ de rayons $r_1$ et $r_2$ déterminent au moins en partie des lignes brisées en forme de triangle dont la hauteur relative au plus petit rayon $r_1$ est plus grande que celle relative au plus grand rayon $r_2$.

2. Structure selon la revendication 1, caractérisée en ce que la bande présente une dimension principale disposée de façon sensiblement circonférentielle ou hélicoïdale sur lesdits tubes.

3. Structure selon l'une quelconque des revendications 1 et 2, caractérisée en ce que la bande comporte des fibres imprégnées de résine thermodurcissable ou thermoplastique.

4. Structure selon l'une quelconque des revendications 1 à 3, caractérisée en ce que la bande est en résine thermoplastique.

5. Structure selon la revendication 3, caractérisée en ce que les fibres comprennent des fibres de verre, de carbone, d'aramide, sous forme de feutre ou de tissus.

6. Structure selon l'une quelconque des revendications 1 à 5, caractérisée en ce qu'elle est garnie au moins partiellement d'une matière isolante.

7. Structure selon l'une quelconque des revendications 1 à 6, dans laquelle ledit tube interne entoure une canalisation, de telle façon que ladite structure constitue une gaine externe isolante pour cette canalisation.

8. Structure selon l'une quelconque des revendications 1 à 7, caractérisée en ce qu'elle est adaptée à une canalisation qui constitue ledit tube interne.

9. Structure selon l'une quelconque des revendications 1 à 8, caractérisée en ce qu'elle adhère au moins partiellement audit tube interne.

10. Structure selon l'une des revendications 1 à 9, caractérisée en ce que ladite bande est collée· suivant sa tranche sur un ruban adhésif disposé sur le tube interne.

## Claims

1. Tubular structure comprising an internal tube $s_1$ of radius $r_1$ and an external tube $s_2$ of radius $r_2$, comprising at least one folded straight strip, its width being arranged basically in accordance with at least one normal to at least one of the said tubes which it separates, characterised in that the straight strip is folded alternately in groups of three folds, the median direction of folding being basically perpendicular to the principal direction of the strip and the direction of the two other folds relative to the said principal direction of the strip forming basically supplementary angles, and in that the strip comprises a zone between the said groups of folds which, after positioning, is at least partly in the form of a ring or helix and in that the traces of the said folds on the tubes $s_1$ and $s_2$ of radii $r_1$ and $r_2$ determine, at least partly, broken lines in the form of a triangle, the relative height for the smaller radius $r_1$ being greater than that relative to the larger radius $r_2$.

2. Structure in accordance with claim 1, characterised in that the strip has a principal dimension arranged basically circumferential or helical to the said tubes.

3. Structure in accordance with any one of claims 1 and 2, characterised in that the strip includes fibres impregnated with a thermo-hardening or thermo-plastic resin.

4. Structure in accordance with any one of claims 1 to 3, characterised in that the strip is made from a thermo-plastic resin.

5. Structure in accordance with claim 3, characterised in that the fibres are glass, carbon or Aramide fibres, in the form of a felt or fabric.

6. Structure in accordance with any one of claims 1 to 5, characterised in that it is filled, at least partially, with an insulating material.

7. Structure in accordance with any one of claims 1 to 6, in which the said internal tube surrounds a pipe, so that the said structure constitutes an external insulating covering for the said pipe.

8. Structure in accordance with any one of claims 1 to 7, characterised in that it is adapted to a pipe constituting the said internal tube.

9. Structure in accordance with any one of claims 1 to 8, characterised in that it adheres at least partially to the said internal tube.

10. Structure in accordance with one of claims 1 to 9, characterised in that the cut edge of the said strip is bonded onto an adhesive tape positioned on the internal tube.

## Patentansprüche

1. Röhrenförmiges Gebilde, ein Innenrohr $s_1$ vom Radius $r_1$ und ein Außenrohr $s_2$ vom Radius $r_2$ umfassend, mit wenigstens einem gefalteten Flachband, dessen Breite im wesentlichen längs wenigstens einer Normalen zu wenigstens einem dieser von ihm getrennten Rohre angeordnet ist, dadurch gekennzeichnet, daß das Flachband alternativ in Gruppen zu drei Falten gefaltet ist, wobei die Richtung der Mittelfaltung im wesentlichen senkrecht zur Hauptrichtung des Bandes und die Richtung der beiden anderen Falten, bezogen auf die Hauptrichtung des Bandes, im wesentlichen Ergänzungswinkel bilden, daß das Band eine Zone zwischen diesen Faltengruppen umfaßt, die nach Anbringung wenigstens zum Teil in Kranz- oder Spiralform vorliegt und daß die Spuren dieser Faltungen auf den Rohren $s_1$ und $s_2$ vom Radius $r_1$ und $r_2$ wenigstens zum Teil gebrochene Linien in Dreiecksgestalt bestimmen, deren Höhe relativ zum kleineren Radius $r_1$ größer als die relativ zum größeren Radius $r_2$ ist.

ner Schnittfläche folgend auf ein auf dem Innenrohr angeordnetes Klebeband geklebt ist.

2. Gebilde nach Anspruch 1, dadurch gekennzeichnet, daß das Band eine Hauptabmessung aufweist, die im wesentlichen in Umfangsrichtung oder Spiralrichtung auf diesen Rohren vorgesehen ist.

3. Gebilde nach einem der Ansprüche 1 und 2, dadurch gekennzeichnet, daß das Band mit wärmehärtbarem oder thermoplastischem Harz imprägnierte Fasern umfaßt.

4. Gebilde nach einem der Ansprüche 1 bis 3, dadurch gekennzeichnet, daß das Band aus thermoplastischem Harz besteht.

5. Gebilde nach Anspruch 3, dadurch gekennzeichnet, daß die Fasern Fasern aus Glas, Kohlenstoff, Aramid in Form von Filz oder Gewebe umfassen.

6. Gebilde nach einem der Ansprüche 1 bis 5, dadurch gekennzeichnet, daß es wenigstens teilweise mit einem isolierenden Material verkleidet bzw. ausgekleidet ist.

7. Gebilde nach einem der Ansprüche 1 bis 6, bei dem das Innenrohr eine Leitung derart umgibt, daß dieses Gebilde eine isolierende Außenhülle für diese Leitung bildet.

8. Gebilde nach einem der Ansprüche 1 bis 7, dadurch gekennzeichnet, daß es für eine dieses Innenrohr bildende Leitung ausgelegt ist.

9. Gebilde nach einem der Ansprüche 1 bis 8, dadurch gekennzeichnet, daß es wenigstens teilweise an diesem Innenrohr haftet.

10. Gebilde nach einem der Ansprüche 1 bis 9, dadurch gekennzeichnet, daß dieses Band sei-

EP 0 234 156 B1

**FIG.1**

**FIG.2**

**FIG.3**

**FIG.4**

8